# EUROPÄISCHE PATENTSCHRIFT

(11) **EP 3 009 817 B1**
(45) Veröffentlichungstag und Bekanntmachung des Hinweises auf die Patenterteilung: **29.03.2017**
(21) Anmeldenummer: 15186674.6
(22) Anmeldetag: 24.09.2015
(51) Int. Cl.: G01K 1/02, G01M 13/04, G01K 13/08

(54) **LAGERSYSTEM UND EIN HALTEKÄFIG FÜR DAS LAGER**
BEARING SYSTEM AND A HOLDING CAGE FOR THE BEARING
SYSTEME DE ROULEMENT ET CAGE DE RETENUE POUR LE ROULEMENT

(30) Priorität: 15.10.2014 CN 201410545623
(43) Veröffentlichungstag der Anmeldung: 20.04.2016
(73) Patentinhaber: Schaeffler Technologies AG & Co. KG, 91074 Herzogenaurach (DE)
(72) Erfinder: Wei, Lai, 201804 Shanghai (CN); Hu, Hualiang, 201805 Shanghai (CN); He, Chenyu, 201805 Shanghai (CN)

(56) Entgegenhaltungen:
- WO-A1-2013/160053
- DE-A1- 19 944 652
- US-A1- 2003 030 565

## Beschreibung

### Technisches Gebiet

Die vorliegende Erfindung betrifft ein Lagersystem und einen Haltekäfig für das Lager.

### Allgemeiner Stand der Technik

Wenn ein Lager dem Einfluss von Erschütterungen ausgesetzt ist, können die Trägheitskräfte unter Umständen relativ groß werden und somit nach einer gewissen Einwirkungsdauer am Haltekäfig Ermüdungsrisse hervorrufen, was letztlich zur Zerstörung des gesamten Lagers führen kann.

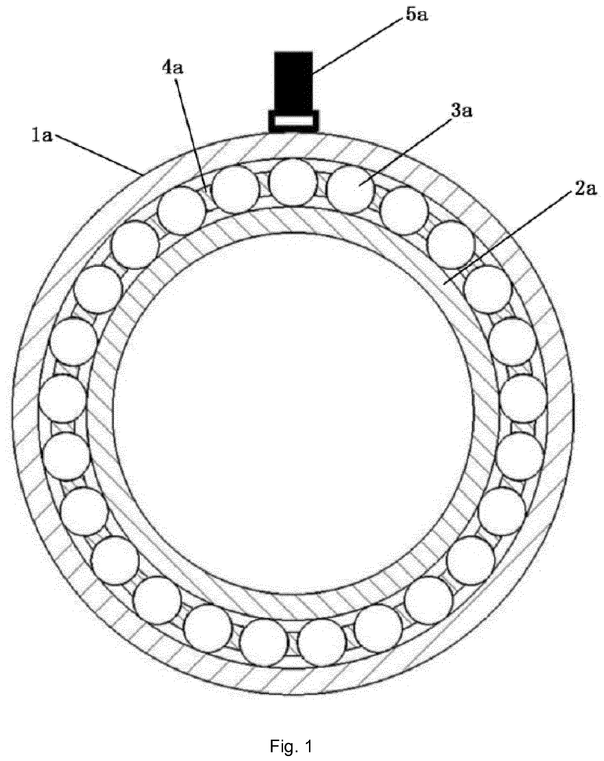

Gegenwärtig verwenden übliche Verfahren zur Überwachung des Arbeitszustands von Lagern am Außenring des Lagers befestigte korrespondierende Sensoren, um die Erschütterungen oder die Temperatur des Lagers zu messen. Wie in Figur 1 gezeigt, umfasst das Lager einen Außenring 1a, einen Innenring 2a, Rollen 3a, einen Haltekäfig 4a und einen am Außenring 1a angebrachten Beschleunigungs-/Temperatursensor 5a zur Messung der Erschütterungen oder der Temperatur des Lagers. Anhand eines gemessenen außergewöhnlichen Erschütterungsniveaus oder einer außergewöhnlich hohen Temperatur können Lagerdefekte an Außenring, Innenring oder Rollen des Lagers erkannt werden.

Allerdings ist dieses Erschütterungs- und Temperaturmessverfahren in Bezug auf Risse im Haltekäfig in einem frühen Stadium nicht immer effektiv, und dieses Erschütterungs- und Temperaturmessverfahren ist in Bezug auf die Überwachung des Haltekäfigs auf Risse in einem frühen Stadium kein zuverlässiges Überwachungsverfahren. In den meisten Fällen müssen die Haltekäfige der Lager immer noch manuell überprüft werden.

Außerdem sind die Haltekäfige von Lagern im Allgemeinen rein mechanische Bauteile, die normalerweise keinerlei Sensoren aufweisen. Der Haltekäfig des Lagers selbst kann keinerlei Informationen zu seinem Arbeitszustand bereitstellen. In einem frühen Stadium des Auftretens von Rissen am Haltekäfig des Lagers kann die Erschütterungs- und Temperaturmessung am Lager ebenfalls keine effektiven Informationen zu Defekten des Haltekäfigs liefern. Falls aber am Haltekäfig Mikrorisse beginnen aufzutreten, verläuft ihr Zerstörungsprozess äußerst schnell. Manchmal ist es, wenn gewartet wird, bis die Erschütterungen oder die Temperatur am Lager ein alarmierendes Niveau erreicht haben, bereits zu spät. Die Messung der Erschütterungen kann ebenso Einflüssen der Umgebung ausgesetzt sein. Darüber hinaus erfordert die manuelle Überprüfung des Lagerzustands eine Demontage des Lagers, was eine äußerst zeitaufwändige Arbeit ist und somit die späteren Instandhaltungskosten für das Lager stark in die Höhe treiben kann.

DE19944652 veröffentlicht ein Lager mit einem Innenring und einem Außenring.

### Kurzdarstellung der Erfindung

Angesichts der oben aufgeführten technischen Probleme beim Stand der Technik ist die Aufgabe der vorliegenden Erfindung die Entwicklung eines Lagersystems und eines Haltekäfigs für ein Lager, welche effektiver und zuverlässiger den Zustand des Haltekäfigs des Lagers überwachen können.

Basierend auf der obigen Aufgabe stellt die vorliegende Erfindung ein Lagersystem bereit, beinhaltend ein Lager, wobei das Lager Folgendes umfasst:
einen Außenring;
einen Innenring;
Rollen, wobei die Rollen in radialer Richtung des Lagers zwischen dem Außenring und dem Innenring angebracht sind; und
einen Haltekäfig, wobei der Haltekäfig in radialer Richtung des Lagers ebenfalls zwischen dem Außenring und dem Innenring angebracht ist und zum Halten der Rollen verwendet wird,
dadurch gekennzeichnet, dass
das Lagersystem außerdem ein Zustandsüberwachungssystem beinhaltet, wobei das Zustandsüberwachungssystem Folgendes umfasst: einen RFID-Chip, wobei der RFID-Chip am Haltekäfig befestigt ist;
eine gedruckte elektrische Leitung, wobei der RFID-Chip und die gedruckte elektrische Leitung miteinander elektrisch verbunden sind, die gedruckte elektrische Leitung entlang des umlaufenden Körpers des Haltekäfigs angebracht ist und unter der Voraussetzung der Unversehrtheit des von der gedruckten elektrischen Leitung bedeckten Teils des Haltekäfigs elektrisch leitend bleibt; und
ein RFID-Lesegerät, wobei das RFID-Lesegerät über ein Hochfrequenzsignal mit dem RFID-Chip kommunizieren kann, um den Zustand des Haltekäfigs zu überwachen.

Vorzugsweise ist der Haltekäfig ringförmig konstruiert und der Haltekäfig umfasst:
einen entlang der Umfangsrichtung des Lagers erstreckten ersten ringförmigen Bestandteil;
einen entlang der Umfangsrichtung des Lagers erstreckten zweiten ringförmigen Bestandteil, wobei der zweite ringförmige Bestandteil und der erste ringförmige Bestandteil entlang der axialen Richtung des Lagers gemeinsam Zwischenräume eröffnen; und
mehrere axiale Verbindungsteile, wobei die axialen Verbindungsteile entlang der axialen Richtung des Lagers den ersten ringförmigen Bestandteil und den zweiten ringförmigen Bestandteil verbinden und somit mehrere Öffnungen bilden, wobei die Öffnungen zur Aufnahme der Rollen verwendet werden,
und wobei der RFID-Chip und die gedruckte elektrische Leitung beide auf der Oberfläche des nicht von den Rollen berührten Teils des Haltekäfigs angebracht sind.

Vorzugsweise ist der RFID-Chip im ersten ringförmigen Bestandteil und im zweiten ringförmigen Bestandteil an der axialen Außenseitenoberfläche jedes ringförmigen Bestandteils angebracht und die gedruckte elektrische Leitung ist in Umfangsrichtung in umlaufender Weise im ersten ringförmigen Bestandteil, im zweiten ringförmigen Bestandteil und in den axialen Verbindungsteilen an mindestens einer Innenumfangsfläche und/oder Außenumfangsfläche angebracht.

Vorzugsweise ist das Lager ein doppelreihiges Kegelrollenlager und weist entlang der axialen Richtung des Lagers zwei Haltekäfige auf, wobei jeder der zwei Haltekäfige mit einem RFID-Chip versehen ist und alle RFID-Chips am axialen Mittelteil des Lagers angebracht sind, wobei am axialen Mittelteil des Außenrings des doppelreihigen Kegelrollenlagers eine Prüfbohrung angebracht ist, die Prüfbohrung entlang der radialen Richtung des Lagers den Außenring durchdringt und das RFID-Lesegerät in die Prüfbohrung gesteckt werden kann, so dass es dem RFID-Chip angenähert wird.

Vorzugsweise wird die gedruckte elektrische Leitung im Herstellungsprozess des Haltekäfigs mit elektrisch leitender Tinte auf die Oberfläche des Haltekäfigs gedruckt.

Vorzugsweise ist der RFID-Chip ein passiver RFID-Chip und der RFID-Chip weist im Innern keine Spannungsquelle auf.

Vorzugsweise beinhaltet das Lagersystem mehrere Lager, wobei in jedem der Lager ein RFID-Chip angebracht ist und alle RFID-Chips der Lager mit demselben am Außenteil der Lager befindlichen RFID-Lesegerät über ein Hochfrequenzsignal kommunizieren können.

Die vorliegende Erfindung stellt außerdem einen Haltekäfig für ein Lager bereit, wobei der Haltekäfig ringförmig konstruiert ist und der Haltekäfig außerdem Folgendes umfasst:
einen entlang der Umfangsrichtung des Lagers erstreckten ersten ringförmigen Bestandteil;
einen entlang der Umfangsrichtung des Lagers erstreckten zweiten ringförmigen Bestandteil, wobei der zweite ringförmige Bestandteil und der erste ringförmige Bestandteil entlang der axialen Richtung des Lagers gemeinsam Zwischenräume eröffnen; und
mehrere axiale Verbindungsteile, wobei die axialen Verbindungsteile entlang der axialen Richtung des Lagers den ersten ringförmigen Bestandteil und den zweiten ringförmigen Bestandteil verbinden und somit mehrere Öffnungen bilden, wobei die Öffnungen zur Aufnahme der Rollen verwendet werden,
dadurch gekennzeichnet, dass
der RFID-Chip und die gedruckte elektrische Leitung am Haltekäfig angebracht sind, wobei der RFID-Chip und die gedruckte elektrische Leitung elektrisch verbunden sind, die gedruckte elektrische Leitung entlang des umlaufenden Körpers des Haltekäfigs angebracht ist und unter der Voraussetzung der Unversehrtheit des von der gedruckten elektrischen Leitung bedeckten Teils des Haltekäfigs elektrisch leitend bleibt und der RFID-Chip über ein Hochfrequenzsignal zur Kommunikation mit dem am Außenteil des Haltekäfigs befindlichen RFID-Lesegerät verwendet wird.

Vorzugsweise ist der RFID-Chip im ersten ringförmigen Bestandteil und im zweiten ringförmigen Bestandteil an der axialen Außenseitenoberfläche jedes ringförmigen Bestandteils angebracht und die gedruckte elektrische Leitung ist in Umfangsrichtung in umlaufender Weise im ersten ringförmigen Bestandteil, im zweiten ringförmigen Bestandteil und in den axialen Verbindungsteilen an mindestens einer Innenumfangsfläche und/oder Außenumfangsfläche angebracht.

Vorzugsweise wird die gedruckte elektrische Leitung im Herstellungsprozess des Haltekäfigs mit elektrisch leitfähiger Tinte auf die Oberfläche des Haltekäfigs gedruckt.

Vorzugsweise ist der RFID-Chip ein passiver RFID-Chip und der RFID-Chip weist im Innern keine Spannungsquelle auf.

Die vorliegende Erfindung verwendet die RFID-Kommunikationstechnik und kann damit den Zustand des Haltekäfigs des Lagers effektiver und zuverlässiger überwachen. Anhand der vorliegenden Erfindung kann vor dem Auftreten von Defekten am Lager rechtzeitig ein Alarm ausgelöst werden und es können somit durch die Beschädigung von Lagern und Anlagen verursachte schwere Verluste vermieden werden. Außerdem kann durch die Verwendung der RFID-Kommunikationstechnik gleichzeitig eine große Anzahl von Lagerkäfigen überwacht werden, wodurch die Kosten stark gesenkt werden können, und darüber hinaus kann das System der vorliegenden Erfindung sehr leicht in bereits bestehende andere Zustandsüberwachungssysteme integriert werden.

### Beschreibung der beigefügten Figuren

Um die technischen Lösungen der Ausführungsbeispiele der vorliegenden Erfindung noch deutlicher zu beschreiben, werden im Folgenden die für die Darstellung der Ausführungsbeispiele zu verwendenden beigefügten Figuren kurz vorgestellt.
Figur 1 zeigt eine vereinfachte Darstellung einer üblichen Anordnung zur Überwachung des Arbeitszustands von Lagern nach dem Stand der Technik.
Figur 2 ist eine perspektivische Darstellung des Haltekäfigs eines Lagers der vorliegenden Erfindung.
Figur 3 ist eine axiale Schnittdarstellung des Lagersystems eines Ausführungsbeispiels gemäß der vorliegenden Erfindung.

### Ausführungsformen

Um die technischen Lösungen der vorliegenden Erfindung für Fachleute auf diesem Gebiet noch besser verständlich zu machen, werden im Folgenden die technischen Lösungen der Ausführungsbeispiele der vorliegenden Erfindung in Kombination mit den den Ausführungsbeispielen beigefügten Figuren deutlich und vollständig erläutert.

Die vorliegende Erfindung betrifft eine Überwachungstechnik für den Haltekäfig von Lagern zur hauptsächlichen Anwendung in Lagern, die in Umgebungen mit hohen Anforderungen an die Zuverlässigkeit arbeiten, wie z. B. die Lager von Schienenfahrzeugen.

Die vorliegende Erfindung stellt einen neuartigen, mit einem Radio-Frequency-Identification(RFID)-Chip und einer entsprechenden gedruckten elektrischen Leitung versehenen Haltekäfig für ein Lager vor, der in der Lage ist, effektiv Informationen über Risse am Haltekäfig des entsprechenden Lagers zu erhalten. Diese Informationen können über eine drahtlose Kommunikationstechnik abgefragt werden. Die Anordnung der vorliegenden Erfindung kann vor dem Auftreten eines Defekts am Lager einen Alarm auslösen, womit die durch eine Beschädigung des gesamten Lagers oder der Anlage verursachten schweren Verluste vermieden werden können.

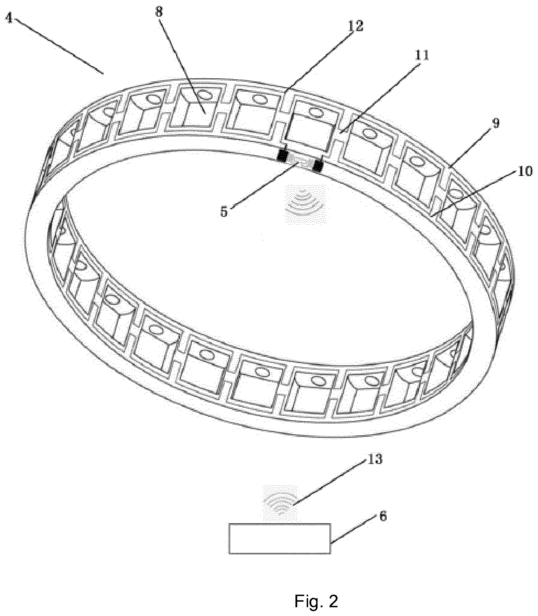

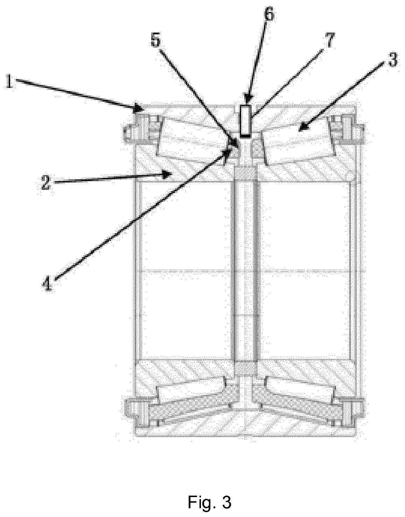

Unter Bezugnahme auf die Figuren 2 und 3 wird die Lösung der vorliegenden Erfindung konkret erläutert. Figur 2 ist eine perspektivische Darstellung des Haltekäfigs eines Lagers aus der vorliegenden Erfindung. Figur 3 ist eine axiale Schnittdarstellung des Lagersystems eines Ausführungsbeispiels gemäß der vorliegenden Erfindung.

Wie in Figur 3 gezeigt, stellt die vorliegende Erfindung ein Lagersystem bereit, beinhaltend ein Lager, wobei das Lager Folgendes umfasst: einen Außenring 1, einen Innenring 2 und Rollen 3, wobei die Rollen 3 in radialer Richtung des Lagers zwischen dem Außenring 1 und dem Innenring 2 angebracht sind; und einen Haltekäfig 4, wobei der Haltekäfig 4 in radialer Richtung des Lagers ebenfalls zwischen dem Außenring 1 und dem Innenring 2 angebracht ist und zum Halten der Rollen 3 verwendet wird.

In einem weiteren Schritt beinhaltet das Lagersystem der vorliegenden Erfindung außerdem ein Zustandsüberwachungssystem, wobei das Zustandsüberwachungssystem die Radio-Frequency-Identification(RFID)-Technik verwendet und die Radio-Frequency-Identification(RFID)-Technik eine drahtlose Kommunikationstechnik ist, die mittels eines drahtlosen elektrischen Signals festgelegte Ziele erkennt und die entsprechenden Daten liest und schreibt und bei der es nicht notwendig ist, zwischen dem Erkennungssystem und dem festgelegten Ziel einen mechanischen oder optischen Kontakt herzustellen.

Unter Bezugnahme auf die Figuren 2 und 3 beinhaltet das Zustandsüberwachungssystem der vorliegenden Erfindung: einen RFID-Chip 5, wobei der RFID-Chip 5 am Haltekäfig 4 befestigt ist; eine gedruckte elektrische Leitung 12, wobei der RFID-Chip 5 und die gedruckte elektrische Leitung 12 elektrisch verbunden sind und die gedruckte elektrische Leitung 12 am Haltekäfig 4 angebracht ist; und ein RFID-Lesegerät 6, wobei das RFID-Lesegerät 6 über ein Hochfrequenzsignal mit dem RFID-Chip 5 kommunizieren kann, um den Zustand des Haltekäfigs 4 zu überwachen. In der vorliegenden Erfindung kann die gedruckte elektrische Leitung 12 entlang des umlaufenden Körpers des Haltekäfigs 4 angebracht sein und unter der Voraussetzung der Unversehrtheit des von der gedruckten elektrischen Leitung 12 bedeckten Teils des Haltekäfigs 4 elektrisch leitend bleiben.

In der vorliegenden Erfindung sind ein kleiner RFID-Chip und eine entsprechende gedruckte elektrische Leitung am Haltekäfig des Lagers angebracht. Konkret kann wie in Figur 2 gezeigt der Haltekäfig 4 ringförmig konstruiert sein, wobei der Haltekäfig 4 außerdem Folgendes umfasst: einen entlang der Umfangsrichtung des Lagers erstreckten ersten ringförmigen Bestandteil 9; einen entlang der Umfangsrichtung des Lagers erstreckten zweiten ringförmigen Bestandteil 10, wobei der zweite ringförmige Bestandteil 10 und der erste ringförmige Bestandteil 9 entlang der axialen Richtung des Lagers gemeinsam Zwischenräume eröffnen; und mehrere axiale Verbindungsteile 11, wobei die axialen Verbindungsteile 11 entlang der axialen Richtung des Lagers den ersten ringförmigen Bestandteil 9 und den zweiten ringförmigen Bestandteil 10 verbinden und somit mehrere Öffnungen 8 bilden, wobei die Öffnungen 8 zur Aufnahme der Rollen 3 verwendet werden und wobei der RFID-Chip 5 und die gedruckte elektrische Leitung 12 beide auf der Oberfläche des nicht von den Rollen 3 berührten Teils des Haltekäfigs 4 angebracht sind. In der vorliegenden Erfindung ist das Gewicht des RFID-Chips und der gedruckten elektrischen Leitung sehr gering und kann somit keinen nachteiligen Einfluss auf die reguläre Funktion des Haltekäfigs ausüben.

Wie in Figur 2 gezeigt, sind der RFID-Chip 5 und die von einer Isolationsschicht bedeckte, gedruckte elektrische Leitung 12 entlang der Oberfläche des Haltekäfigs des Lagers angebracht. Der RFID-Chip 5 ist im ersten ringförmigen Bestandteil 9 und im zweiten ringförmigen Bestandteil 10 an der axialen Außenseitenoberfläche jedes ringförmigen Bestandteils angebracht und die gedruckte elektrische Leitung 12 ist etwa in Umfangsrichtung in umlaufender Weise im ersten ringförmigen Bestandteil 9, im zweiten ringförmigen Bestandteil 10 und in den axialen Verbindungsteilen 11 an mindestens einer Innenumfangsfläche und/oder Außenumfangsfläche angebracht. Die gedruckte elektrische Leitung 12 bildet in ihrer Gesamtheit einen vollständigen Stromkreis (in der Figur werden die Verbindungsdetails der unterschiedlichen Abschnitte des Schaltkreises nicht gezeigt) und ihre beiden Enden sind elektrisch mit dem RFID-Chip 5 verbunden.

In der Anwendung erzeugt das RFID-Lesegerät 6 ein drahtloses Hochfrequenzsignal, um mit dem RFID-Chip 5 zu kommunizieren, und erhält gleichzeitig vom RFID-Chip 5 entsprechende Informationen. In Figur 2 ist mit der Bezugsziffer 13 die Kommunikation über das Hochfrequenzsignal (RF) gekennzeichnet. Durch die Verwendung von RFID-Ausrüstung mit der entsprechenden Spezifikation kann beim Rotieren des Lagers die Kommunikation zwischen dem RFID-Lesegerät 6 und dem RFID-Chip 5 immer noch effektiv arbeiten. Dabei kann der Kommunikationsabstand bis zu 30 m betragen. In der Anwendung kann das RFID-Lesegerät mit einem Computer oder anderen externen Verarbeitungsgeräten verbunden werden, um die Informationen vom RFID-Lesegerät umgehend zu verarbeiten.

Wenn sich der Haltekäfig des Lagers in einem guten Zustand befindet, kann das RFID-Lesegerät 6 vom RFID-Chip 5 am Haltekäfig 4 die entsprechenden Informationen regulär erhalten. Die Dicke der gedruckten elektrischen Leitung 12 kann etwa 0,1 mm betragen, wobei sie nicht dehnbar ist. Wenn am Haltekäfig des Lagers wegen lang anhaltender Erschütterungen der Umgebung Risse auftreten, so wird die gedruckte elektrische Leitung durch die Risse unterbrochen und bleibt damit nicht länger elektrisch leitend, weshalb das RFID-Lesegerät 6 vom RFID-Chip 5 am Haltekäfig 4 nicht mehr regulär die entsprechenden Informationen erhalten kann und somit das Auftreten von Rissen am Haltekäfig anzeigen kann.

Die Anordnung des RFID-Lesegeräts kann entsprechend den tatsächlichen Einsatzbedingungen verändert werden. Hinsichtlich doppelreihiger Kegelrollenlager für Schienentriebfahrzeuge ist eine Anordnung des RFID-Lesegeräts wie in Figur 3 möglich.

Wie in Figur 3 gezeigt, ist das Lager ein doppelreihiges Kegelrollenlager und weist entlang der axialen Richtung des Lagers zwei Haltekäfige 4 auf, wobei sich die beiden Haltekäfige 4 axial getrennt auf der linken und auf der rechten Seite befinden und in jedem der beiden Haltekäfige 4 ein RFID-Chip 5 angebracht ist, d. h. es gibt zwei RFID-Chips 5, wobei sich die beiden RFID-Chips 5 axial getrennt auf der linken und auf der rechten Seite befinden und alle RFID-Chips 5 am axialen Mittelteil des Lagers angebracht sind.

Am axialen Mittelteil des Außenrings des doppelreihigen Kegelrollenlagers ist eine Prüfbohrung 7 angebracht, wobei die Prüfbohrung 7 entlang der radialen Richtung des Lagers den Außenring 1 durchdringt und das RFID-Lesegerät 6 in die Prüfbohrung 7 gesteckt werden kann, so dass es dem RFID-Chip 5 angenähert wird. D. h., das RFID-Lesegerät 6 wird von der Prüfbohrung 7 im Außenring des Lagers in das Lager gesteckt und damit dem Haltekäfig des Lagers angenähert. Wie aus Figur 3 zu entnehmen, kann ein RFID-Lesegerät 6, welches in die Prüfbohrung 7 gesteckt wird, verwendet werden, um mit zwei RFID-Chips 5 gleichzeitig zu kommunizieren. Mit einer solchen Konstruktion lässt sich die gleichzeitige Überwachung des Zustands der Haltekäfige auf beiden Seiten, rechts und links umsetzen.

In der vorliegenden Erfindung kann die gedruckte elektrische Leitung 12 im Herstellungsprozess des Haltekäfigs 4 mit elektrisch leitender Tinte auf die Oberfläche des Haltekäfigs 4 gedruckt werden. Darüber hinaus kann die gedruckte elektrische Leitung 12 auch in anderer Form auf der Oberfläche des Haltekäfigs 4 befestigt werden.

In der vorliegenden Erfindung kann der RFID-Chip 5 ein passiver RFID-Chip sein, wobei der RFID-Chip im Innern keine Spannungsquelle aufweist. Der RFID-Chip kann durch das RFID-Lesegerät über hochfrequente elektromagnetische Wellen mit Energie versorgt und abgefragt werden, weshalb im Lagerinnern grundsätzlich keine zusätzliche Spannungsquelle zur Spannungsversorgung des RFID-Chips benötigt wird. Der RFID-Chip 5 kann zur Kommunikation das Ultrahochfrequenzband (UHF) verwenden. Darüber hinaus wird durch die Verwendung eines kontaktlosen Messverfahrens der reguläre Betrieb des Lagers durch das RFID-Lesegerät nicht beeinträchtigt.

Außerdem kann in der vorliegenden Erfindung das Lagersystem mehrere Lager beinhalten, wobei jedes der Lager einen RFID-Chip 5 aufweist und alle RFID-Chips 5 der Lager mit demselben am Außenteil der Lager befindlichen RFID-Lesegerät 6 über ein Hochfrequenzsignal kommunizieren können. D. h., gemäß der vorliegenden Erfindung kann ein RFID-Lesegerät gleichzeitig zur Kommunikation mit mehreren RFID-Chips verwendet werden. Auf diese Weise lassen sich mit einem RFID-Lesegerät gleichzeitig Informationen zum Zustand der Haltekäfige von mehreren Lagern erhalten. Das bedeutet, dass gleichzeitig mehrere Lager überwacht werden können, was sehr gut geeignet ist für eine Anwendung in Zustandsüberwachungssystemen von Radlagern bei Eisenbahnen und U-Bahnen wie in Figur 3 gezeigt.

Aus den vorangegangenen Ausführungen lässt sich erkennen, dass gemäß der vorliegenden Erfindung für den Haltekäfig eines Lagers ein RFID-Sensor zur Bereitstellung von Zustandsinformationen verwendet wird; außerdem verwendet die vorliegende Erfindung die RFID-Technik, um damit eine kontaktlose Messung zu realisieren und so in Echtzeit den Arbeitszustand des Haltekäfigs eines Lagers zu überwachen, ohne dass der reguläre Betrieb des Lagers beeinträchtigt wird; gemäß der vorliegenden Erfindung kann vor dem Auftreten von Defekten am Lager rechtzeitig ein Alarm ausgelöst werden und somit durch die Beschädigung der Lager oder der Anlagen verursachte schwere Verluste vermieden werden; außerdem kann durch die Verwendung der RFID-Kommunikationstechnik gleichzeitig eine große Anzahl an Haltekäfigen von Lagern überwacht werden, was eine äußerst kostengünstige Lösung ist; und das System der vorliegenden Erfindung kann sehr leicht in bereits bestehende andere Zustandsüberwachungssysteme der Lager integriert werden.

Die obigen Ausführungen sind nur einige konkrete Ausführungsbeispiele der vorliegenden Erfindung. Es wird darauf hingewiesen, dass hinsichtlich der für einen Durchschnittsfachmann auf dem technischen Gebiet durchführbaren, diversen Kombinationen oder Verbesserungen und Abwandlungen, die an den obigen Ausführungsbeispielen vorgenommen werden können, unter der Voraussetzung, dass diese nicht die Prinzipien und Konzepte der vorliegenden Erfindung verlassen, diese Kombinationen, Verbesserungen und Abwandlungen ebenfalls als in den Schutzumfang und die Grundgedanken der vorliegenden Erfindung fallend zu betrachten sind.

## Patentansprüche

1. Lagersystem, beinhaltend ein Lager und das Lager umfassend:
einen Außenring (1);
einen Innenring (2);
Rollen (3), wobei die Rollen (3) in radialer Richtung des Lagers zwischen dem Außenring (1) und dem Innenring (2) angebracht sind; und
einen Haltekäfig (4), wobei der Haltekäfig (4) in radialer Richtung des Lagers ebenfalls zwischen dem Außenring (1) und dem Innenring (2) angebracht ist und zum Halten der Rollen (3) verwendet wird,
**dadurch gekennzeichnet, dass**
das Lagersystem außerdem ein Zustandsüberwachungssystem beinhaltet, wobei das Zustandsüberwachungssystem Folgendes umfasst:
einen RFID-Chip (5), wobei der RFID-Chip (5) am Haltekäfig (4) befestigt ist;
eine gedruckte elektrische Leitung (12), wobei der RFID-Chip (5) und die gedruckte elektrische Leitung (12) miteinander elektrisch verbunden sind, die gedruckte elektrische Leitung (12) entlang des umlaufenden Körpers des Haltekäfigs (4) angebracht ist und unter der Voraussetzung der Unversehrtheit des von der gedruckten elektrischen Leitung (12) bedeckten Teils des Haltekäfigs (4) elektrisch leitend bleibt; und
ein RFID-Lesegerät (6), wobei das RFID-Lesegerät (6) über ein Hochfrequenzsignal mit dem RFID-Chip (5) kommunizieren kann, um den Zustand des Haltekäfigs (4) zu überwachen.

2. Lagersystem nach Anspruch 1, **dadurch gekennzeichnet, dass** der Haltekäfig (4) ringförmig konstruiert ist und der Haltekäfig (4) außerdem Folgendes umfasst:
einen entlang der Umfangsrichtung des Lagers erstreckten ersten ringförmigen Bestandteil (9);
einen entlang der Umfangsrichtung des Lagers erstreckten zweiten ringförmigen Bestandteil (10), wobei der zweite ringförmige Bestandteil (10) und der erste ringförmige Bestandteil (9) entlang der axialen Richtung des Lagers gemeinsam Zwischenräume eröffnen; und
mehrere axiale Verbindungsteile (11), wobei die axialen Verbindungsteile (11) entlang der axialen Richtung des Lagers den ersten ringförmigen Bestandteil (9) und den zweiten ringförmigen Bestandteil (10) verbinden und somit mehrere Öffnungen (8) bilden, wobei die Öffnungen (8) zur Aufnahme der Rollen (3) verwendet werden,
und wobei der RFID-Chip (5) und die gedruckte elektrische Leitung (12) beide auf der Oberfläche des nicht von den Rollen (3) berührten Teils des Haltekäfigs (4) angebracht sind.

3. Lagersystem nach Anspruch 2, **dadurch gekennzeichnet, dass** der RFID-Chip (5) im ersten ringförmigen Bestandteil (9) und im zweiten ringförmigen Bestandteil (10) an der axialen Außenseitenoberfläche jedes ringförmigen Bestandteils angebracht ist und die gedruckte elektrische Leitung (12) in Umfangsrichtung in umlaufender Weise im ersten ringförmigen Bestandteil (9), im zweiten ringförmigen Bestandteil (10) und in den axialen Verbindungsteilen (11) an mindestens einer Innenumfangsfläche und/oder Außenumfangsfläche angebracht ist.

4. Lagersystem nach einem der Ansprüche 1 - 3, **dadurch gekennzeichnet, dass**
das Lager ein doppelreihiges Kegelrollenlager ist und entlang der axialen Richtung des Lagers zwei Haltekäfige (4) aufweist, wobei jeder der zwei Haltekäfige (4) mit einem RFID-Chip (5) versehen ist und alle RFID-Chips (5) am axialen Mittelteil des Lagers angebracht sind, wobei am axialen Mittelteil des Außenrings des doppelreihigen Kegelrollenlagers eine Prüfbohrung (7) angebracht ist, die Prüfbohrung (7) entlang der radialen Richtung des Lagers den Außenring (1) durchdringt und das RFID-Lesegerät (6) in die Prüfbohrung (7) gesteckt werden kann, so dass es dem RFID-Chip angenähert wird.

5. Lagersystem nach einem der Ansprüche 1 - 3, **dadurch gekennzeichnet, dass**
die gedruckte elektrische Leitung (12) im Herstellungsprozess des Haltekäfigs (4) mit elektrisch leitender Tinte auf die Oberfläche des Haltekäfigs (4) gedruckt wird.

6. Lagersystem nach einem der Ansprüche 1 - 3, **dadurch gekennzeichnet, dass**
der RFID-Chip (5) ein passiver RFID-Chip ist und der RFID-Chip im Innern keine Spannungsquelle aufweist.

7. Lagersystem nach einem der Ansprüche 1 - 3, **dadurch gekennzeichnet, dass**
das Lagersystem mehrere Lager beinhaltet, wobei in jedem der Lager ein RFID-Chip (5) angebracht ist und alle RFID-Chips (5) der Lager mit demselben am Außenteil der Lager befindlichen RFID-Lesegerät (6) über ein Hochfrequenzsignal kommunizieren können.

8. Haltekäfig für ein Lager, wobei der Haltekäfig (4) ringförmig konstruiert ist und der Haltekäfig (4) außerdem Folgendes umfasst:
einen entlang der Umfangsrichtung des Lagers erstreckten ersten ringförmigen Bestandteil (9);
einen entlang der Umfangsrichtung des Lagers erstreckten zweiten ringförmigen Bestandteil (10), wobei der zweite ringförmige Bestandteil (10) und der erste ringförmige Bestandteil (9) entlang der axialen Richtung des Lagers gemeinsam Zwischenräume eröffnen; und
mehrere axiale Verbindungsteile (11), wobei die axialen Verbindungsteile (11) entlang der axialen Richtung des Lagers den ersten ringförmigen Bestandteil (9) und den zweiten ringförmigen Bestandteil (10) verbinden und somit mehrere Öffnungen (8) bilden, wobei die Öffnungen (8) zur Aufnahme der Rollen (3) verwendet werden,
**dadurch gekennzeichnet, dass** ein RFID-Chip (5) und eine gedruckte elektrische Leitung (12) am Haltekäfig (4) angebracht sind, wobei der RFID-Chip (5) und die gedruckte elektrische Leitung (12) elektrisch verbunden sind, die gedruckte elektrische Leitung (12) entlang des umlaufenden Körpers des Haltekäfigs (4) angebracht ist und wobei diese unter der Voraussetzung der Unversehrtheit des von der gedruckten elektrischen Leitung (12) bedeckten Teils des Haltekäfigs (4) elektrisch leitend bleibt und der RFID-Chip (5) über ein Hochfrequenzsignal zur Kommunikation mit dem am Außenteil des Haltekäfigs (4) befindlichen RFID-Lesegerät (6) verwendet wird.

9. Haltekäfig für ein Lager nach Anspruch 8, **dadurch gekennzeichnet, dass**
der RFID-Chip (5) im ersten ringförmigen Bestandteil (9) und im zweiten ringförmigen Bestandteil (10) an der axialen Außenseitenoberfläche jedes ringförmigen Bestandteils angebracht ist und die gedruckte elektrische Leitung (12) in Umfangsrichtung in umlaufender Weise im ersten ringförmigen Bestandteil (9), im zweiten ringförmigen Bestandteil (10) und in den axialen Verbindungsteilen (11) an mindestens einer Innenumfangsfläche und/oder Außenumfangsfläche angebracht ist.

10. Haltekäfig für ein Lager nach Anspruch 8 oder 9, **dadurch gekennzeichnet, dass**
die gedruckte elektrische Leitung (12) im Herstellungsprozess des Haltekäfigs (4) mit elektrisch leitender Tinte auf die Oberfläche des Haltekäfigs (4) gedruckt wird.

11. Haltekäfig für ein Lager nach Anspruch 8 oder 9, **dadurch gekennzeichnet, dass**
der RFID-Chip (5) ein passiver RFID-Chip ist und der RFID-Chip im Innern keine Spannungsquelle aufweist.

## Claims

1. Bearing system including a bearing and the bearing comprising:
an outer ring (1);
an inner ring (2);
rollers (3), the rollers (3) being fitted between the outer ring (1) and the inner ring (2) in the -radial direction of the bearing; and
a holding cage (4), the holding cage (4) likewise being fitted between the outer ring (1) and the inner ring (2) in the radial direction of the bearing and being used to hold the rollers (3),
**characterized in that**
the bearing system additionally includes a condition monitoring system, wherein the condition monitoring system comprises the following:
an RFID chip (5), wherein the RFID chip (5) is fixed to the holding cage (4);
a printed electric wire (12), wherein the RFID chip (5) and the printed electric wire (12) are connected electrically to each other, the printed electric wire (12) is fitted along the circumferential body of the holding cage (4) and, assuming the intactness of the part of the holding cage (4) covered by the printed electric wire (12), remains electrically conductive; and
an RFID reading device (6), wherein the RFID reading device (6) is able to communicate with the RFID chip (5) via a high-frequency signal in order to monitor the condition of the holding cage (4).

2. Bearing system according to Claim 1, **characterized in that**
the holding cage (4) is constructed annularly and the holding cage (4) additionally comprises the following:
a first annular portion (9) which extends along a circumferential direction of the bearing;
a second annular portion (10) which extends along the circumferential direction of the bearing, wherein the second annular portion (10) and the first annular portion (9) together open up interspaces along the axial direction of the bearing; and
a plurality of axial connecting parts (11), wherein the axial connecting parts (11) connect the first annular portion (9) and the second annular portion (10) along the axial direction of the bearing and thus form a plurality of openings (8), wherein the openings (8) are used to hold the rollers (3),
and wherein the RFID chip (5) and the printed electric wire (12) are both fitted to the surface of the part of the holding cage (4) that is not in contact with the rollers (3).

3. Bearing system according to Claim 2, **characterized in that**
the RFID chip (5) is fitted in the first annular portion (9) and in the second annular portion (10) on the axial outside surface of each annular portion, and the printed electric wire (12) is fitted in the circumferential direction in a circumferential manner to at least one inner circumferential surface and/or outer circumferential surface in the first annular portion (9), in the second annular portion (10) and in the axial connecting parts (11).

4. Bearing system according to one of Claims 1 - 3, **characterized in that**
the bearing is a double-row tapered roller bearing and has two holding cages (4) along the axial direction of the bearing, wherein each of the two holding cages (4) is provided with an RFID chip (5) and all the RFID chips (5) are fitted to the axial central part of the bearing,
wherein an inspection hole (7) is fitted to the axial central part of the outer ring of the double-row tapered roller bearing, the inspection hole (7) penetrates the outer ring (1) along the radial direction of the bearing, and the RFID reading device (6) can be plugged into the inspection hole (7), so that it is brought close to the RFID chip.

5. Bearing system according to one of Claims 1 - 3, **characterized in that**
the printed electric wire (12) is printed onto the surface of the holding cage (4) by using electrically conductive ink during the production process of the holding cage (4).

6. Bearing system according to one of Claims 1 - 3, **characterized in that**
the RFID chip (5) is a passive RFID chip, and the RFID chip has no voltage source inside.

7. Bearing system according to one of Claims 1 - 3, **characterized in that**
the bearing system includes a plurality of bearings, wherein an RFID chip (5) is fitted in each of the bearings and all the RFID chips (5) of the bearings are able to communicate via a high-frequency signal with the RFID reading device (6) located on the outer part of the bearings.

8. Holding cage for a bearing, the holding cage (4) being constructed annularly and the holding cage (4) additionally comprising the following:
a first annular portion (9) which extends along the circumferential direction of the bearing;
a second annular portion (10) which extends along the circumferential direction of the bearing, the second annular portion (10) and the first annular portion (9) together opening up interspaces along the axial direction of the bearing; and
a plurality of axial connecting parts (11), the axial connecting parts (11) connecting the first annular portion (9) and the second annular portion (10) along the axial direction of the bearing and thus forming a plurality of openings (8), the openings (8) being used to hold the rollers (3);
**characterized in that**
an RFID chip (5) and a printed electric wire (12) are fitted to the holding cage (4), wherein the RFID chip (5) and the printed electric wire (12) are connected electrically, the printed electric wire (12) is fitted along the circumferential body of the holding cage (4), and wherein, assuming the intactness of the part of the holding cage (4) covered by the printed electric wire (12), the latter remains electrically conductive, and an RFID reading device (6), and the RFID chip (5) is used for communication via a high-frequency signal with the RFID reading device (6) located on the outer part of the holding cage (4).

9. Holding cage for a bearing according to Claim 8, **characterized in that**
the RFID chip (5) is fitted to the axial outside surface of each annular portion in the first annular portion (9) and in the second annular portion (10), and the printed electric wire (12) is fitted in the circumferential direction in a circumferential manner to at least one inner circumferential surface and/or outer circumferential surface in the first annular portion (9), in the second annular portion (10) and in the axial connecting parts (11).

10. Holding cage for a bearing according to Claim 8 or 9, **characterized in that**
the printed electric wire (12) is printed onto the surface of the holding cage (4) by using electrically conductive ink during the production process of the holding cage (4).

11. Holding cage for a bearing according to Claim 8 or 9, **characterized in that**
the RFID chip (5) is a passive RFID chip, and the RFID chip has no voltage source inside.

## Revendications

1. Système de palier, contenant un palier et le palier comprenant :
une bague extérieure (1) ;
une bague intérieure (2) ;
des rouleaux (3), les rouleaux (3) étant montés dans le sens radial du palier entre la bague extérieure (1) et la bague intérieure (2) ; et
une cage de retenue (4), la cage de retenue (4) étant montée dans le sens radial du palier également entre la bague extérieure (1) et la bague intérieure (2) et étant utilisée pour retenir les rouleaux (3),
**caractérisé en ce que**
le système de palier contient en outre un système de surveillance de l'état, le système de surveillance de l'état comprenant les éléments suivants :
une puce RFID (5), la puce RFID (5) étant fixée à la cage de retenue (4) ;
une ligne électrique imprimée (12), la puce RFID (5) et la ligne électrique imprimée (12) étant reliées électriquement l'une à l'autre, la ligne électrique imprimée (12) étant appliquée le long du corps circonférentiel de la cage de retenue (4) et restant électriquement conductrice à la condition de l'intégrité de la partie de la cage de retenue (4) qui est recouverte par la ligne électrique imprimée (12) ; et
un lecteur RFID (6), le lecteur RFID (6) pouvant communiquer avec la puce RFID (5) par le biais d'un signal à haute fréquence pour surveiller l'état de la cage de retenue (4).

2. Système de palier selon la revendication 1, **caractérisé en ce que** la cage de retenue (4) est construite en forme d'anneau et la cage de retenue (4) comprend en outre les éléments suivants :
un premier élément constitutif (9) de forme annulaire qui s'étend le long du sens du pourtour du palier ;
un deuxième élément constitutif (10) de forme annulaire qui s'étend le long du sens du pourtour du palier, le deuxième élément constitutif (10) de forme annulaire et le premier élément constitutif (9) de forme annulaire ouvrant des espaces intermédiaires communs le long du sens axial du palier ; et
plusieurs pièces de liaison axiales (11), les pièces de liaison axiales (11) reliant le premier élément constitutif (9) de forme annulaire et le deuxième élément constitutif (10) de forme annulaire le long du sens axial du palier et formant ainsi plusieurs ouvertures (8), les ouvertures (8) étant utilisées pour accueillir les rouleaux (3),
et la puce RFID (5) et la ligne électrique imprimée (12) étant toutes deux appliquées sur la surface de la partir de la cage de retenue (4) qui n'est pas en contact avec les rouleaux (3).

3. Système de palier selon la revendication 2, **caractérisé en ce que** la puce RFID (5), dans le premier élément constitutif (9) de forme annulaire et dans le deuxième élément constitutif (10) de forme annulaire, est montée sur la surface du côté extérieur axial de chaque élément constitutif de forme annulaire, et la ligne électrique imprimée (12) est appliquée dans le sens du pourtour de manière circonférentielle dans le premier élément constitutif (9) de forme annulaire, dans le deuxième élément constitutif (10) de forme annulaire et dans les pièces de liaison axiales (11) sur au moins une surface de pourtour intérieure et/ou une surface de pourtour extérieure.

4. Système de palier selon l'une des revendications 1 à 3, **caractérisé en ce que**
le palier est un palier à rouleaux coniques à double rangée et possède deux cages de retenue (4) le long du sens axial du palier, chacune des deux cages de retenue (4) étant pourvue d'une puce RFID (5) et toutes les puces RFID (5) étant montées au niveau du centre axial du palier,
un trou de contrôle (7) étant pratiqué au niveau de la partie centrale axiale de la bague extérieure du palier à rouleaux coniques à double rangée, le trou de contrôle (7) traversant la bague extérieure (1) le long du sens radial du palier et le lecteur RFID (6) pouvant être inséré dans le trou de contrôle (7) de manière à pouvoir être approché de la puce RFID.

5. Système de palier selon l'une des revendications 1 à 3, **caractérisé en ce que**
la ligne électrique imprimée (12) est imprimée avec de
la peinture électriquement conductrice sur la surface de la cage de retenue (4) lors du processus de fabrication de la cage de retenue (4).

6. Système de palier selon l'une des revendications 1 à 3, **caractérisé en ce que** la puce RFID (5) est une puce RFID passive et la puce RFID ne possède aucune source de tension interne.

7. Système de palier selon l'une des revendications 1 à.3, **caractérisé en ce que**
le système de palier contient plusieurs paliers, une puce RFID (5) étant montée dans chacun des paliers et toutes les puces RFID (5) des paliers pouvant communiquer par le biais d'un signal à haute fréquence avec le même lecteur RFID (6) se trouvant sur la partie extérieure du palier.

8. Cage de retenue pour un palier, la cage de retenue (4) étant construite de forme annulaire et la cage de retenue (4) comprenant en outre les éléments suivants :
un premier élément constitutif (9) de forme annulaire qui s'étend le long du sens du pourtour du palier ;
un deuxième élément constitutif (10) de forme annulaire qui s'étend le long du sens du pourtour du palier, le deuxième élément constitutif (10) de forme annulaire et le premier élément constitutif (9) de forme annulaire ouvrant des espaces intermédiaires communs le long du sens axial du palier ; et
plusieurs pièces de liaison axiales (11), les pièces de liaison axiales (11) reliant le premier élément constitutif (9) de forme annulaire et le deuxième élément constitutif (10) de forme annulaire le long du sens axial du palier et formant ainsi plusieurs ouvertures (8), les ouvertures (8) étant utilisées pour accueillir les rouleaux (3),
**caractérisée en ce que**
une puce RFID (5) et une ligne électrique imprimée (12) sont montées sur la cage de retenue (4), la puce RFID (5) et la ligne électrique imprimée (12) étant reliées électriquement l'une à l'autre, la ligne électrique imprimée (12) étant appliquée le long du corps circonférentiel de la cage de retenue (4) et restant électriquement conductrice à la condition de l'intégrité de la partie de la cage de retenue (4) qui est recouverte par la ligne électrique imprimée (12) et la puce RFID (5) étant utilisée pour la communication par le biais d'un signal à haute fréquence avec un lecteur RFID (6) qui se trouve sur la partie extérieure de la cage de retenue (4).

9. Cage de retenue pour un palier selon la revendication 8, **caractérisée en ce que**
la puce RFID (5), dans le premier élément constitutif (9) de forme annulaire et dans le deuxième élément constitutif (10) de forme annulaire, est montée sur la surface du côté extérieur axial de chaque élément constitutif de forme annulaire, et la ligne électrique imprimée (12) est appliquée dans le sens du pourtour de manière circonférentielle dans le premier élément constitutif (9) de forme annulaire, dans le deuxième élément constitutif (10) de forme annulaire et dans les pièces de liaison axiales (11) sur au moins une surface de pourtour intérieure et/ou une surface de pourtour extérieure.

10. Cage de retenue pour un palier selon la revendication 8 ou 9, **caractérisée en ce que** la ligne électrique imprimée (12) est imprimée avec de la peinture électriquement conductrice sur la surface de la cage de retenue (4) lors du processus de fabrication de la cage de retenue (4).

11. Cage de retenue pour un palier selon la revendication 8 ou 9, **caractérisée en ce que** la puce RFID (5) est une puce RFID passive et la puce RFID ne possède aucune source de tension interne.
